# EUROPEAN PATENT SPECIFICATION

(11) **EP 4 622 165 B1**
(45) Date of publication and mention of the grant of the patent: **12.08.2026**
(21) Application number: 23891345.3
(22) Date of filing: 31.10.2023
(51) Int. Cl.: H04L 9/40, H04L 9/08, G06F 21/34, H04L 9/32, G09C 1/00

(54) **INFORMATION PROCESSING SYSTEM, INFORMATION PROCESSING DEVICE AND METHOD, AND PROGRAM**
INFORMATIONSVERARBEITUNGSSYSTEM, INFORMATIONSVERARBEITUNGSVORRICHTUNG UND -VERFAHREN SOWIE PROGRAMM
SYSTÈME DE TRAITEMENT D'INFORMATIONS, DISPOSITIF ET PROCÉDÉ DE TRAITEMENT D'INFORMATIONS, ET PROGRAMME

(30) Priority: 16.11.2022 JP 2022183059
(43) Date of publication of application: 24.09.2025
(73) Proprietor: FeliCa Networks, Inc., Tokyo 141-0032 (JP)
(72) Inventor: NAKATSUGAWA, Yasumasa, Tokyo 141-0032 (JP); YONEDA, Atsuo, Tokyo 141-0032 (JP)
(74) Representative: D Young & Co LLP
(86) International application number: PCT/JP2023/039179
(87) International publication number: WO 2024/106192

(56) References cited:
- EP-A1- 3 758 403
- CN-A- 109 741 506
- JP-A- 2005 330 778
- JP-A- 2005 330 778
- JP-A- 2008 308 975
- JP-A- 2012 004 766
- US-A1- 2008 008 315

## Description

### [Technical Field]

The present technology relates to an information processing system, an information processing device and method, and a program, and in particular to an information processing system, an information processing device and method, and a program that are capable of improving convenience.

### [Background Art]

Conventionally, a technology is known for opening and closing the doors of a vehicle and controlling the engine by using a digital key installed in a smartphone.

As an authentication technology, a technology has been proposed in which authentication is performed using group authentication information and IC access authentication information to enable a single reader/writer to securely read and write information from and to an IC module equipped with a plurality of applications (see, for example, PTL 1).

### [Citation List]

### [Patent Literature]

[PTL 1]
JP 2007-179135A

Other prior art is shown in JP 2005330778A, US2008/008315A, EP3758403A and CN109741506A.

### [Summary]

### [Technical Problem]

When using a digital key installed in a smartphone, it is expected that the user will carry an IC card that functions as a backup digital key of the vehicle in case the smartphone breaks down or the battery runs out.

However, in a case where the user carries a backup IC card issued by an automobile manufacturer, the user needs to carry the backup IC card in a wallet or other similar location, which is inconvenient.

The present technology has been made in view of such circumstances to aim to improve convenience.

### [Solution to Problem]

An information processing system according to a first aspect of the present technology is provided in claim 1.

### [Brief Description of Drawings]

[Fig. 1]

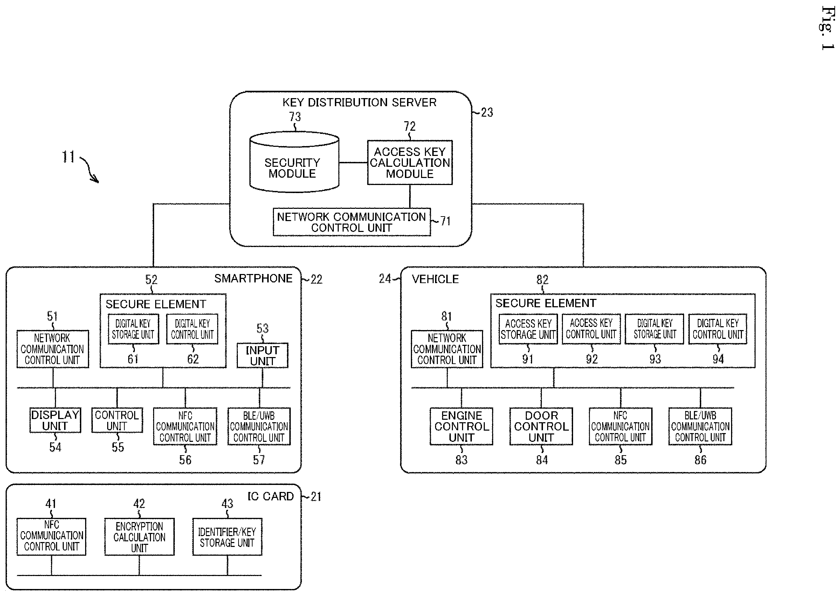

   Fig. 1 is a diagram illustrating a configuration example of an information processing system.
[Fig. 2]

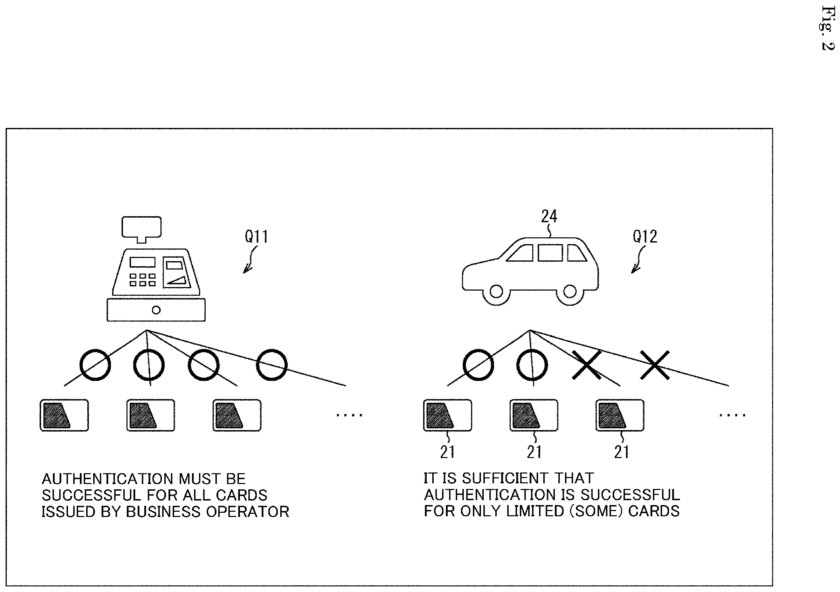

   Fig. 2 is a diagram illustrating use cases.
[Fig. 3]

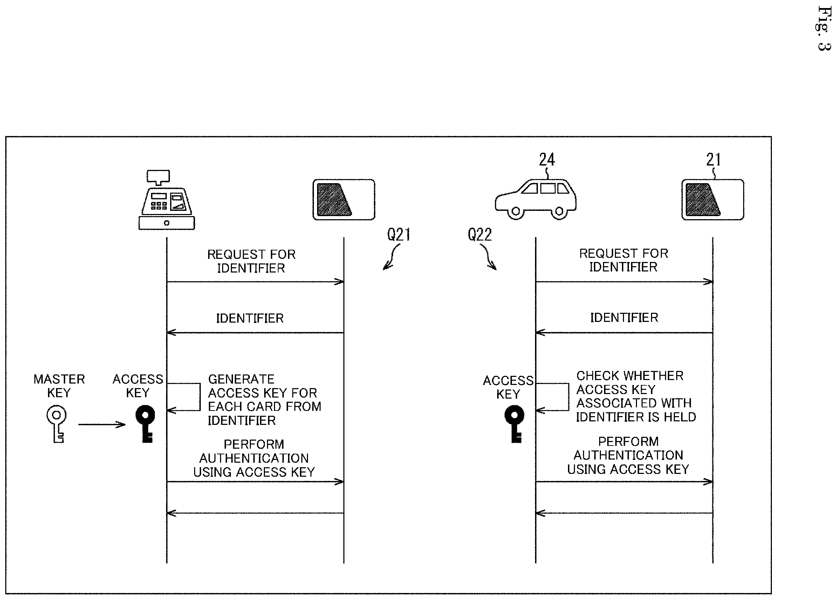

   Fig. 3 is a diagram illustrating use cases.
[Fig. 4]

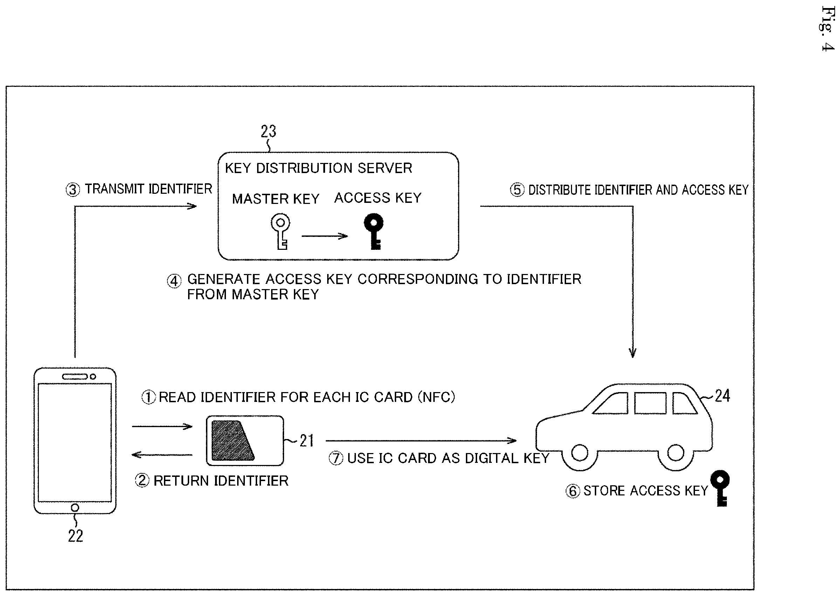

   Fig. 4 is a diagram illustrating generation and distribution of an access key.
[Fig. 5]

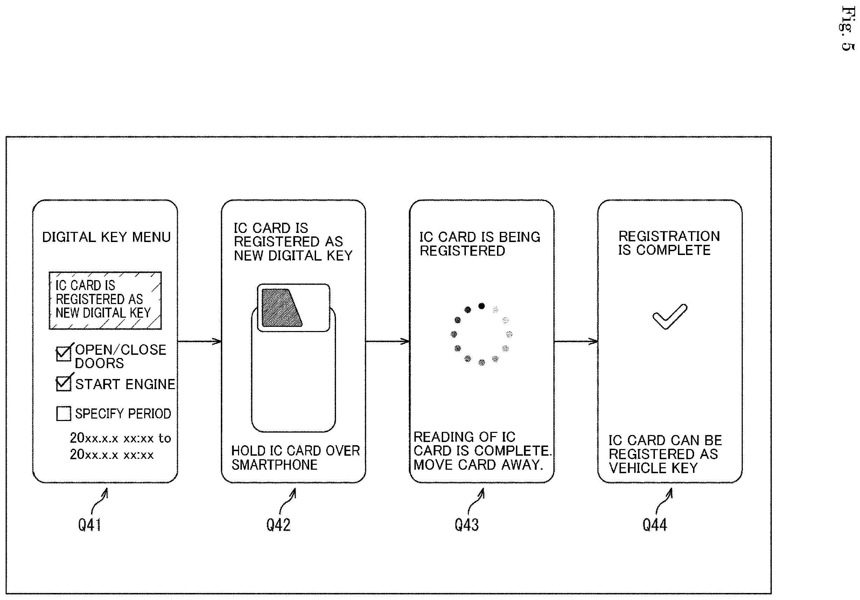

   Fig. 5 is a diagram illustrating a screen example for registering an IC card.
[Fig. 6]

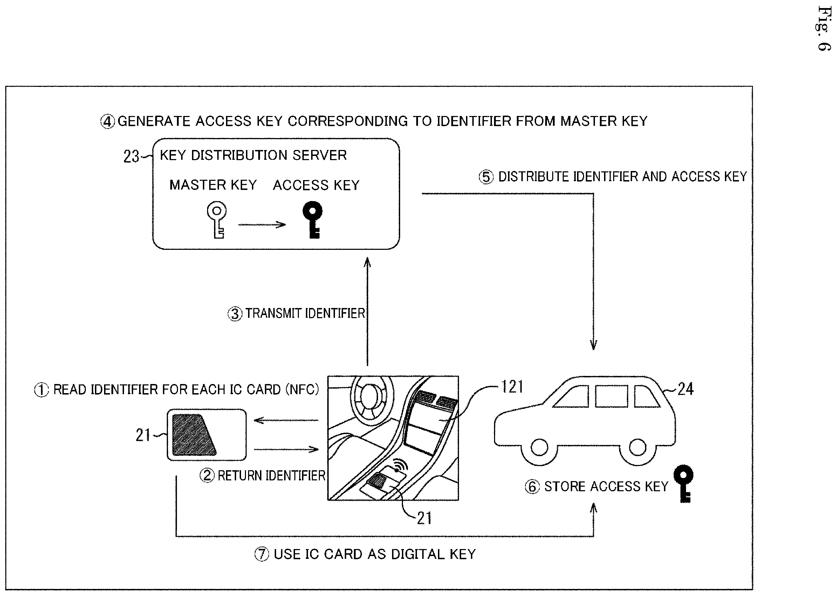

   Fig. 6 is a diagram illustrating generation and distribution of an access key.
[Fig. 7]

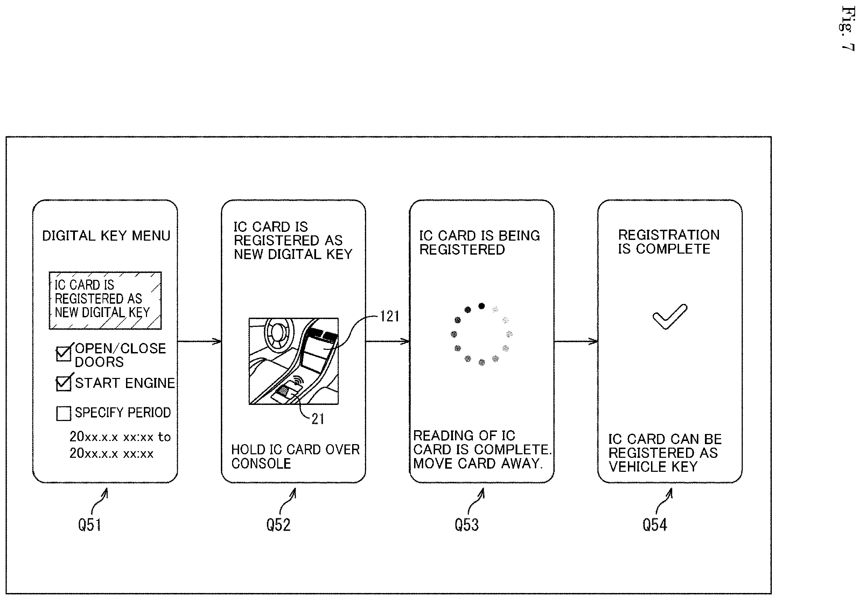

   Fig. 7 is a diagram illustrating a screen example for registering an IC card.
[Fig. 8]

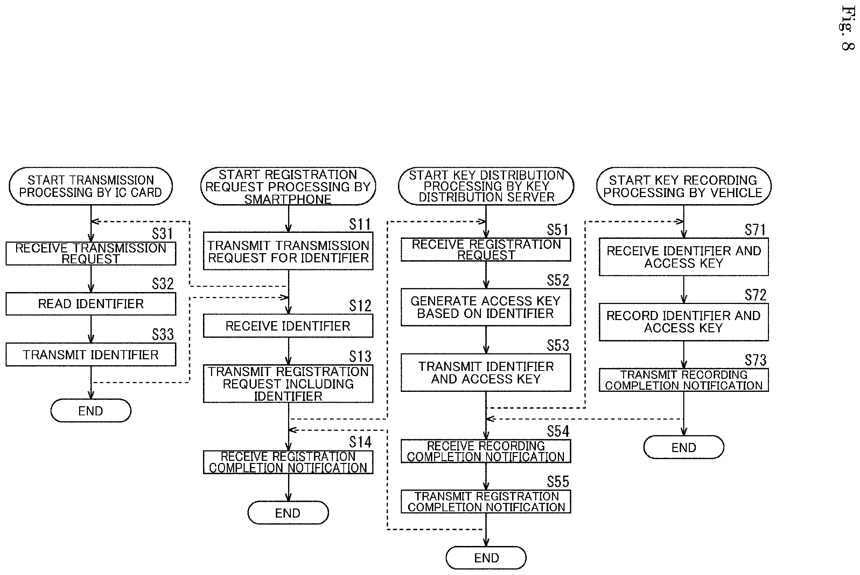

   Fig. 8 is a flowchart illustrating an operation of the information processing system.
[Fig. 9]

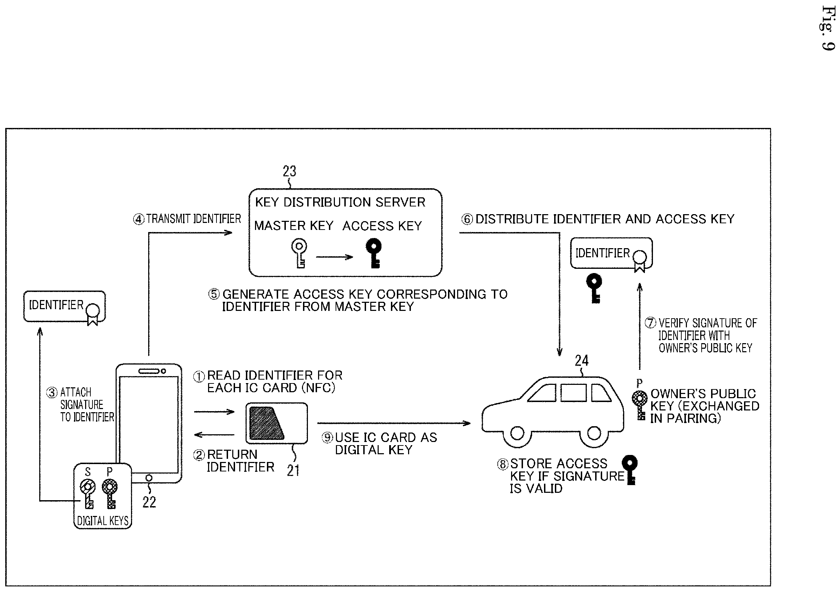

   Fig. 9 is a diagram illustrating generation and distribution of an access key.
[Fig. 10]

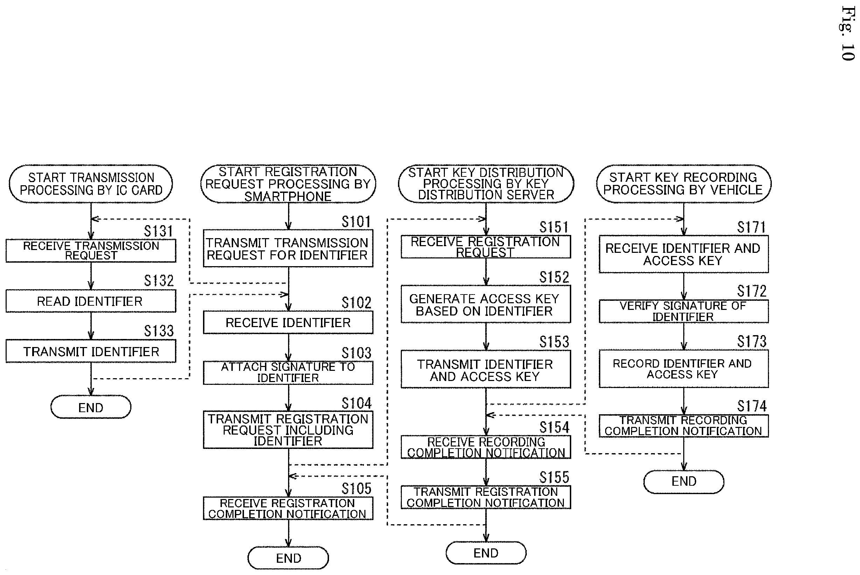

   Fig. 10 is a flowchart illustrating an operation of the information processing system.
[Fig. 11]

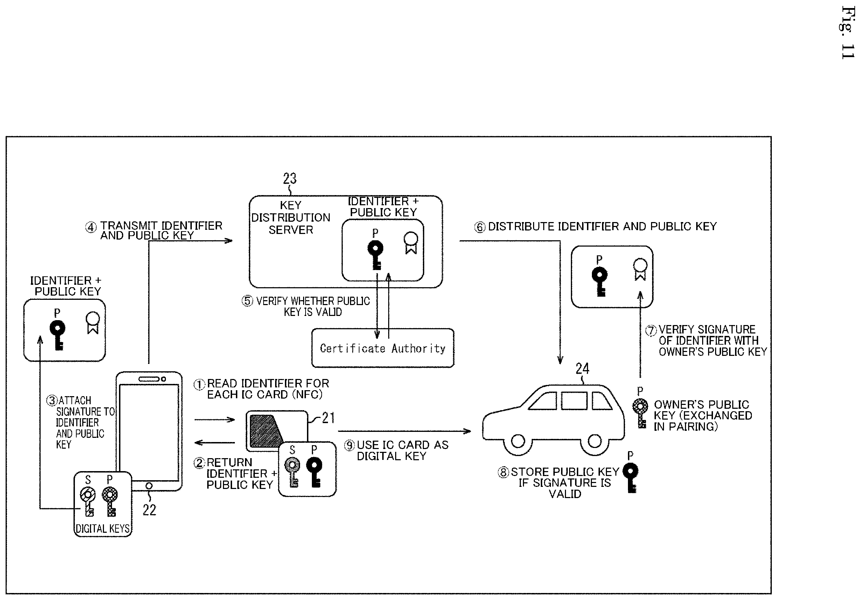

   Fig. 11 is a diagram illustrating distribution of a public key.
[Fig. 12]

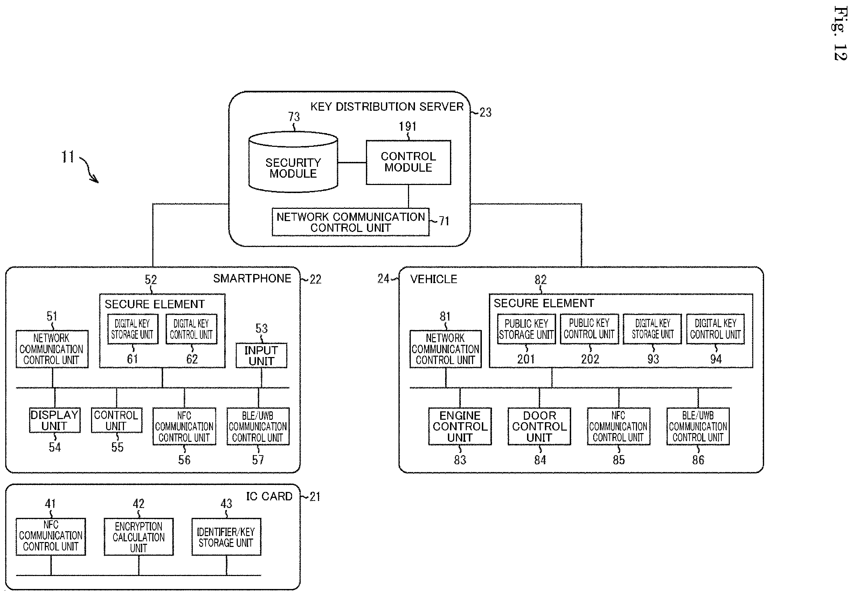

   Fig. 12 is a diagram illustrating a configuration example of an information processing system.
[Fig. 13]

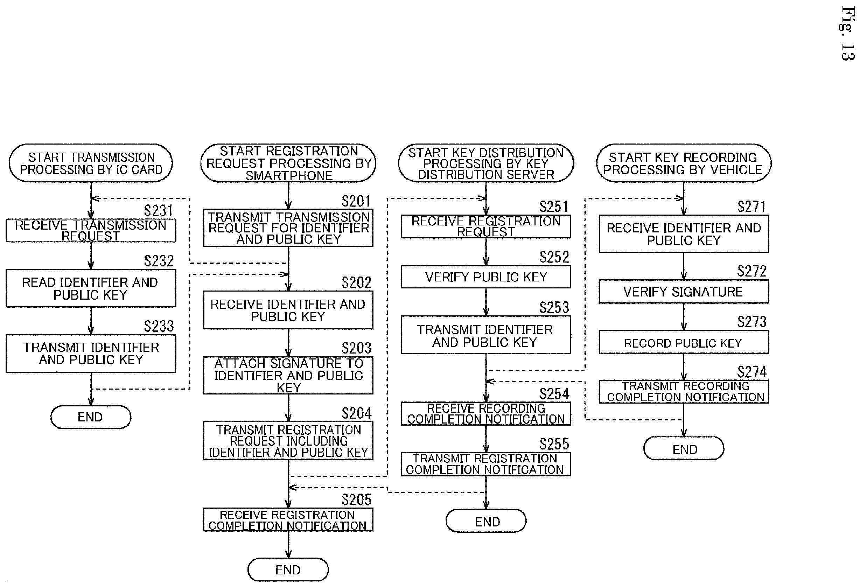

   Fig. 13 is a flowchart illustrating an operation of the information processing system.
[Fig. 14]

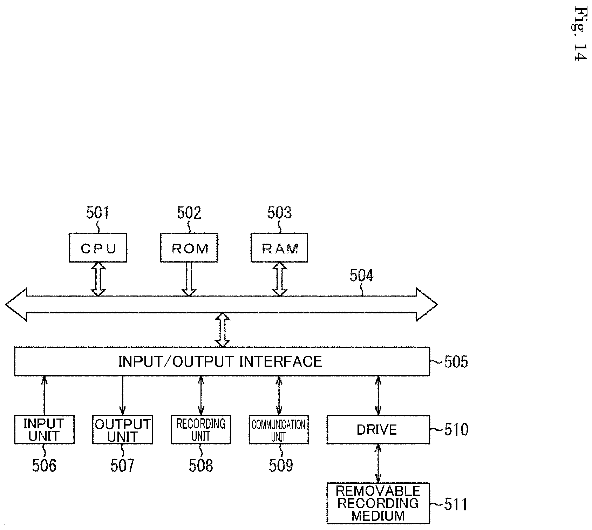

   Fig. 14 is a diagram illustrating a configuration example of a computer.

### [Description of Embodiments]

Embodiments to which the present technology is applied will be described below with reference to the accompanying drawings.

### <First Embodiment>

### <Configuration Example of Information Processing System>

The present technology enables the owner of a digital key of a vehicle to use any IC card already owned by the owner as a backup card for the digital key.

As used herein, the IC cards already owned by the owner include IC cards (plastic cards) issued by an issuer (business operator) other than the automobile manufacturer, such as a transportation IC card, an electronic money card, and the Individual Number Card.

Thus, the user can use any IC card that the user already carries, that is, an IC card of an existing business operator other than the automobile manufacturer, as a backup card. Therefore, the user will no longer need to carry a separate IC card dedicated to backup issued by the automobile manufacturer. This can improve convenience.

Fig. 1 is a diagram illustrating a configuration example of an embodiment of an information processing system to which the present technique is applied.

The information processing system 11 illustrated in Fig. 1 includes an IC card 21, a smartphone 22, a key distribution server 23, and a vehicle 24.

The IC card 21 is any IC card owned by the owner (user) of the vehicle 24 such as a passenger car. For example, the IC card 21 is an IC card issued by an existing business operator other than the automobile manufacturer that manufactures or sells the vehicle 24.

The user can use the smartphone 22 to register the IC card 21 already owned by the user to the key distribution server 23, thereby enabling the IC card 21 to function as a backup digital key of the vehicle 24. One or more IC cards 21 may be registered in the key distribution server 23.

The smartphone 22 is an information processing device owned by the owner (user) of the vehicle 24, and a digital key of the vehicle 24 is installed in the smartphone 22. In other words, the smartphone 22 functions as the digital key of the vehicle 24. The digital key of the vehicle 24 is issued in advance by the automobile manufacturer, and is an electronic key used to perform an operation on the vehicle 24.

For example, the user can use the digital key recorded in the smartphone 22 to perform operations on the vehicle 24, such as opening and closing (unlocking and locking) the doors of the vehicle 24 and controlling the engine (starting the engine).

The smartphone 22 also performs processing for registering the IC card 21 to the key distribution server 23 as a backup digital key of the vehicle 24 in response to a user operation.

The information processing device used to register the IC card 21 is not limited to a smartphone, but may be any device such as a tablet.

The information processing device used to register the IC card 21 does not necessarily have to function as a digital key of the vehicle 24, but an example will be described below in which the smartphone 22 functioning as a digital key is used to register the IC card 21.

The key distribution server 23 is an information processing device managed by a business operator that distributes access keys (hereinafter, also referred to as a key distribution operator).

In response to a request from the smartphone 22, the key distribution server 23 generates an access key for enabling the IC card 21 to function as a backup digital key of the vehicle 24, and distributes the generated access key to the vehicle 24.

The key distribution server 23 generates, for each IC card 21, an access key dedicated (unique) to that IC card 21, that is, a different access key for each IC card 21.

It is assumed that the key distribution business operator that distributes the access key is a business operator different from a business operator that manages the network connection of the vehicle 24. Therefore, more specifically, it is highly likely that the access key will be distributed from the key distribution server 23 to the vehicle 24 via a plurality of servers, but for the sake of simplicity, illustrations of these servers are omitted herein.

The vehicle 24 is a passenger car or the like owned by the user, and records the access key distributed from the key distribution server 23.

The vehicle 24 also communicates with the smartphone 22 or the IC card 21 used as a digital key, and opens and closes its own doors, starts the engine, and so on, as appropriate. In particular, herein, the vehicle 24 is an operation target device that is to be operated by the IC card 21 when the IC card 21 is made to function as a backup digital key.

The IC card 21 includes a near-field communication (NFC) communication control unit 41, an encryption calculation unit 42, and an identifier/key storage unit 43. These components from the NFC communication control unit 41 to the identifier/key storage unit 43 are connected to each other via a bus.

The NFC communication control unit 41 performs wireless communication, that is, NFC (short-range wireless communication), with the smartphone 22 and the vehicle 24. For example, the NFC communication control unit 41 reads an identifier of the IC card 21 from the identifier/key storage unit 43 and transmits the identifier to the smartphone 22 or the vehicle 24 through wireless communication.

As used herein, the identifier of the IC card 21 is identification information that is assigned to the IC card 21, for example, when it is issued, and is for uniquely identifying the IC card 21.

Based on the identifier and a master key of the IC card 21, which are recorded (stored) in the identifier/key storage unit 43, the encryption calculation unit 42 derives an access key unique to the IC card 21 identified by the identifier.

As used herein, the master key is a key issued by a business operator that has issued the IC card 21 (hereinafter also referred to as the card business operator), or by a business operator that has been commissioned by the card business operator. In particular, the master key is a key common to all IC cards 21 and can be used to access all of the IC cards 21 issued by the card business operator.

The access key is, for example, an encryption key for a common-key cryptosystem such as the Advanced Encryption Standard (AES).

The encryption calculation unit 42 uses the derived access key of the IC card 21 to encrypt the communication path with a communication partner such as the smartphone 22 or the vehicle 24, that is, to encrypt and decrypt information exchanged with the communication partner.

The identifier/key storage unit 43 is made up of a non-volatile memory, and records the identifier and master key of the IC card 21, and the access key of the IC card 21 derived by the encryption calculation unit 42.

If the access key of the IC card 21 is already recorded in the identifier/key storage unit 43, or if the access key is supplied from an external device and recorded in the identifier/key storage unit 43, the master key does not need to be recorded in the identifier/key storage unit 43.

The smartphone 22 includes a network communication control unit 51, a secure element 52, an input unit 53, a display unit 54, a control unit 55, an NFC communication control unit 56, and a Bluetooth Low Energy (BLE) / Ultra Wide Band (UWB) communication control unit 57.

The network communication control unit 51 communicates with the key distribution server 23 via a network such as the Internet. For example, the network communication control unit 51 transmits the identifier read from the IC card 21 to the key distribution server 23.

The secure element 52 is an element that executes various types of processing such as authentication using the digital key of the vehicle 24, and includes a digital key storage unit 61 and a digital key control unit 62.

The digital key storage unit 61 records the digital key of the vehicle 24 that has been issued in advance by the automobile manufacturer. For example, the secret key and public key of the smartphone 22 and the public key of the vehicle 24 are recorded in the digital key storage unit 61 as digital keys.

The secret key and public key of the smartphone 22 are, for example, a pair of keys in a public-key cryptosystem. The public key of the vehicle 24 is the public key in a pair of secret and public keys recorded in the vehicle 24 in a public-key cryptosystem.

The digital key control unit 62 performs various types of processing such as mutual authentication with the vehicle 24 using the digital keys recorded (stored) in the digital key storage unit 61.

The input unit 53 is composed of, for example, switches, buttons, a touch panel superimposed on the display unit 54, and outputs a signal in response to a user operation. The display unit 54 is made up of a small display, and displays various images, such as a registration screen for registering the IC card 21.

The control unit 55 controls the overall operation of the smartphone 22. For example, the control unit 55 causes the display unit 54 to display a registration screen or the like based on a signal in response to a user operation supplied from the input unit 53.

The NFC communication control unit 56 performs wireless communication with the IC card 21, that is, short-range wireless communication. For example, the NFC communication control unit 56 receives the identifier transmitted from the IC card 21 through wireless communication. In other words, the NFC communication control unit 56 reads the identifier from the IC card 21 through short-range wireless communication.

The BLE/UWB communication control unit 57 performs wireless communication with the vehicle 24, that is, wireless communication that combines BLE and UWB (ultra-wideband wireless communication). For example, the BLE/UWB communication control unit 57 performs mutual authentication with the vehicle 24 using the BLE wireless communication method, and performs highly accurate position detection between the vehicle 24 and the smartphone 22 using UWB.

The key distribution server 23 includes a network communication control unit 71, an access key calculation module 72, and a security module 73.

The network communication control unit 71 communicates with the smartphone 22 and the vehicle 24 via a network such as the Internet.

For example, the network communication control unit 71 receives the identifier of the IC card 21 from the smartphone 22 and transmits an access key to the vehicle 24.

The access key calculation module 72 calculates (derives) an access key to be distributed to the vehicle 24 for enabling the IC card 21 to function as a backup digital key, based on the identifier of the IC card 21 and the master key recorded in advance in the security module 73.

As used herein, the master key has been issued by the card business operator.

In other words, the master key recorded in the security module 73 is the same as the master key recorded in the identifier/key storage unit 43 of the IC card 21. As a security measure, a master key for calculating (deriving) the master key recorded in the IC card 21 may be recorded in the security module 73. In such a case, the master key recorded in the security module 73 and the master key recorded in the IC card 21 are not the same (they are different master keys). In the following description, for the sake of simplicity, it is assumed that the master key recorded in the security module 73 and the master key recorded in the IC card 21 are the same.

On the other hand, the access key is a key that is individualized for each IC card 21 to allow access only to that IC card 21. In other words, the access key is a key unique to the IC card 21 indicated by the identifier. This access key is the same as the access key recorded in the identifier/key storage unit 43 of the IC card 21.

The security module 73 records master keys prepared in advance. In other words, the security module 73 functions as a master key storage unit that records (stores) the master keys.

The vehicle 24 includes a network communication control unit 81, a secure element 82, an engine control unit 83, a door control unit 84, an NFC communication control unit 85, and a BLE/UWB communication control unit 86.

The network communication control unit 81 to the BLE/UWB communication control unit 86 are connected to each other by a control communication bus such as a Controller Area Network (CAN)-BUS.

The network communication control unit 81 communicates with the key distribution server 23 via a network such as the Internet. For example, the network communication control unit 81 receives the access key of the IC card 21 transmitted (distributed) from the key distribution server 23.

The secure element 82 is an element that executes various types of processing such as authentication with the smartphone 22 and the IC card 21.

The secure element 82 includes an access key storage unit 91, an access key control unit 92, a digital key storage unit 93, and a digital key control unit 94.

The access key storage unit 91 records the access key of the IC card 21 distributed from the key distribution server 23. In particular, the access key storage unit 91 stores the access key of the IC card 21 in association with the identifier of the IC card 21.

The access key control unit 92 performs various types of processing such as authentication with the IC card 21 by using the access key recorded (stored) in the access key storage unit 91.

The digital key storage unit 93 records the digital key of the vehicle 24 that has been issued in advance by the automobile manufacturer.

For example, the secret key and public key of the vehicle 24 and the public key of the smartphone 22 are recorded in the digital key storage unit 93 as digital keys.

The secret key and public key of the vehicle 24 are, for example, a pair of keys in a public-key cryptosystem, and of the secret key and public key, the public key is recorded in the digital key storage unit 61 of the smartphone 22. The public key of the smartphone 22 recorded in the digital key storage unit 93 is the same as that recorded in the digital key storage unit 61 of the smartphone 22.

The digital key control unit 94 performs various types of processing such as mutual authentication with the smartphone 22 using the digital key recorded (stored) in the digital key storage unit 93.

For example, for mutual authentication between the smartphone 22 and the vehicle 24, wireless communication is performed between the BLE/UWB communication control unit 57 of the smartphone 22 and the BLE/UWB communication control unit 86 of the vehicle 24.

The digital key control unit 62 of the smartphone 22 uses the secret key of the smartphone 22 and the public key of the vehicle 24, which are stored in the digital key storage unit 61, to perform processing for mutual authentication such as encryption and signature verification. Similarly, the digital key control unit 94 of the vehicle 24 uses the secret key of the vehicle 24 and the public key of the smartphone 22, which are stored in the digital key storage unit 93, to perform processing for mutual authentication such as encryption and signature verification.

The engine control unit 83 controls the operation of the engine (not illustrated) provided in the vehicle 24, such as starting and stopping the engine. The door control unit 84 controls the opening and closing of the doors (not illustrated) provided on the vehicle 24, more specifically, the unlocking and locking of the doors.

The NFC communication control unit 85 performs wireless communication with the IC card 21, that is, NFC (short-range wireless communication). For example, the NFC communication control unit 85 receives the identifier transmitted from the IC card 21.

The BLE/UWB communication control unit 86 performs wireless communication with the smartphone 22, that is, wireless communication that combines BLE and UWB (ultra-wideband wireless communication). For example, the BLE/UWB communication control unit 86 performs mutual authentication with the smartphone 22 using the BLE wireless communication method, and performs highly accurate position detection between the vehicle 24 and the smartphone 22 using UWB.

Although an example will be described herein in which a digital key of the vehicle 24 is installed in the smartphone 22, the digital key does not necessarily have to be installed (stored) in the smartphone 22.

For example, in a case where a digital key of the vehicle 24 is not installed in the smartphone 22, the smartphone 22 does not need to include the secure element 52 or the BLE/UWB communication control unit 57.

### <Present Technology>

Next, a use case of the information processing system 11 will be described, compared to an example of a payment terminal such as a payment Point of Sale (PoS) terminal.

For example, as indicated by an arrow Q11 in Fig. 2, when an IC card is used for payment at a payment terminal, authentication must be successful for all IC cards issued by the card business operator. In other words, it is necessary to make it possible to use any IC card issued by the card business operator at a payment terminal.

In contrast, for example, as indicated by an arrow Q12, when the IC card 21 is used as a backup digital key of the vehicle 24, it is sufficient that authentication is successful for only a limited number of IC cards 21 out of a plurality of IC cards 21 issued by the card business operator.

Thus, out of the plurality of IC cards 21, it is sufficient that only those registered in the key distribution server 23 function as backup digital keys. In this case, any number of IC cards 21 may be used as backup digital keys.

When a payment terminal authenticates an IC card, particularly when the authentication is performed offline at the payment terminal without connected to a server, processing indicated by an arrow Q21 in Fig. 3 is performed, for example.

Specifically, first, the payment terminal requests the IC card for the identifier of that IC card, and acquires the identifier from the IC card.

Next, the payment terminal generates an access key individualized for the IC card based on the acquired identifier and a master key recorded in advance. The payment terminal then uses the generated access key to transmit and receive necessary information to and from the IC card to authenticate the IC card.

In this way, the payment terminal needs to record a master key that can access all IC cards.

On the other hand, when the vehicle 24 authenticates the IC card 21 that functions as a backup digital key, processing indicated by an arrow Q22 is performed.

Specifically, the NFC communication control unit 85 of the vehicle 24 transmits a transmission request to the IC card 21 to request the transmission of an identifier for identifying the IC card 21.

When the NFC communication control unit 41 of the IC card 21 receives the transmission request from the vehicle 24, the NFC communication control unit 41 transmits to the vehicle 24 the identifier of the IC card 21 read from the identifier/key storage unit 43 in accordance with the transmission request.

When the NFC communication control unit 85 of the vehicle 24 receives the identifier from the IC card 21, the access key control unit 92 checks whether the access key associated with the received identifier is held in the access key storage unit 91.

If it is confirmed that the access key is held, the access key control unit 92 reads out the access key corresponding to the identifier from the access key storage unit 91.

Then, the access key control unit 92 transmits and receives necessary information to and from the IC card 21 via the NFC communication control unit 85 to authenticate the IC card 21 using the access key.

As an example, the access key control unit 92 performs authentication processing using, for example, a challenge-and-response method or the like.

In this case, a random number generated by the secure element 82 is transmitted to the IC card 21 by the NFC communication control unit 85, and on the IC card 21 side, the random number received by the NFC communication control unit 41 is encrypted using the access key in the encryption calculation unit 42.

When the encrypted random number is transmitted to the vehicle 24 by the NFC communication control unit 41, and the encrypted random number is then received by the NFC communication control unit 85 of the vehicle 24, the encrypted random number is decrypted using the access key in the access key control unit 92.

Then, the access key control unit 92 compares the random number obtained by decryption with the original random number to determine whether the IC card 21 has been registered in the key distribution server 23 as a backup digital key. Thus, authentication of the IC card 21 is achieved.

If authentication of the IC card 21 is successful, then, in response to commands from the secure element 82, the door control unit 84 controls the opening and closing of the doors, that is, unlocks and locks the doors, and the engine control unit 83 starts the engine.

In order to realize such use cases, unlike the example of the payment terminal, it is only necessary to store an access key of each IC card 21 on the vehicle 24 side, and there is no need to store a master key common to all IC cards 21.

The above use cases can be realized by distributing an access key that allows access only to a specified IC card 21, that is, an access key that is individualized for each IC card 21, from the key distribution server 23 to the vehicle 24, as in the information processing system 11.

### <Generation and Distribution of Access Key>

In the information processing system 11, in order to realize the use cases described with reference to Figs. 2 and 3, the generation and distribution of an access key is performed as roughly illustrated in Fig. 4.

First, as illustrated in the lower left of Fig. 4, the smartphone 22 reads an identifier unique to the IC card 21 from the IC card 21 through NFC.

Specifically, the smartphone 22 requests the IC card 21 to transmit an identifier, and the IC card 21 transmits the identifier to the smartphone 22 in response to the request.

The smartphone 22 then receives the identifier from the IC card 21 and transmits the received identifier to the key distribution server 23.

The key distribution server 23 generates an access key corresponding to the identifier of the IC card 21 based on the identifier of the IC card 21 received from the smartphone 22 and a master key common to all the IC cards 21 that is recorded in advance.

The key distribution server 23 then distributes (transmits) the identifier of the IC card 21 and the generated access key to the vehicle 24. The vehicle 24 stores the identifier and access key distributed by the key distribution server 23 in the access key storage unit 91 in association with each other.

By distributing the access key in this manner, the IC card 21 is registered in the key distribution server 23 as a backup digital key.

After the access key is distributed in the manner described above, the user is allowed to use the IC card 21 as a backup digital key of the vehicle 24. Using the IC card 21, when the user holds the IC card 21 over the vehicle 24, the authentication processing described with reference to Fig. 3 is performed.

When the user uses the smartphone 22 to register the IC card 21, a screen such as that illustrated in Fig. 5 is displayed on the display unit 54 of the smartphone 22.

In an example illustrated in Fig. 5, for example, when the user wishes to register the IC card 21, the user first operates the input unit 53 to cause the display unit 54 to display a registration screen as indicated by an arrow Q41. In this case, the control unit 55 controls the display unit 54 to cause the display unit 54 to display a registration screen, based on a signal supplied from the input unit 53 in response to a user operation.

The registration screen is a screen for registering the IC card 21 as a backup digital key.

On the registration screen, when the user uses the IC card 21 as a backup digital key, the user can specify an operation on the vehicle 24 for which permission (authority) is to be given to the IC card 21, a validity period during which the IC card 21 is allowed to perform an operation on the vehicle 24, and so on.

Specifically, the user can perform an operation on a check box provided to the left of the text "Open/Close Doors" to enable opening and closing of the doors of the vehicle 24 using the IC card 21.

Similarly, the user can perform an operation on a check box provided to the left of the text "Start Engine" to enable starting of the engine of the vehicle 24 using the IC card 21.

Hereinafter, an operation, specified by the user, on the vehicle 24 to give permission (authority) to the IC card 21 to enable the IC card 21 to function as a backup digital key is also referred to as a specification operation.

The user can specify a period during which the IC card 21 functions (is used) as a backup digital key by performing an operation on a check box to the left of the text "Specify Period" and entering a desired period (year, month, and date).

Hereinafter, a period, specified by the user, during which the IC card 21 functions as a backup digital key, that is, a period during which an operation on the vehicle 24 using the IC card 21 is possible is also be referred to as a validity period.

When the user specifies the specification operation and validity period on the registration screen indicated by the arrow Q41 and performs an operation to confirm the specification, the control unit 55 controls the display unit 54 to cause the display unit 54 to display a screen indicated by an arrow Q42. In other words, the control unit 55 changes the display screen from the registration screen indicated by the arrow Q41 to the screen indicated by the arrow Q42.

On the screen indicated by the arrow Q42, a text message and an image are displayed, encouraging the user to hold the IC card 21 to be registered over the smartphone 22, and the user then holds the IC card 21 over the smartphone 22 in accordance with the text message and image.

Then, NFC (short-range wireless communication) is performed between the smartphone 22 and the IC card 21, and the identifier of the IC card 21 is read out as described above. The read identifier is then transmitted from the smartphone 22 to the key distribution server 23 together with specification operation information indicating the specification operation specified by the user and validity period information indicating the validity period.

When the identifier is read, the control unit 55 controls the display unit 54 to cause the display unit 54 to display a screen indicated by an arrow Q43.

On the screen indicated by the arrow Q43, a text message is displayed, informing the user that the IC card 21 is being registered, that the identifier (IC card 21) has been read, and urging the user to move the IC card 21 away from the smartphone 22.

When the access key of the IC card 21 is recorded in the vehicle 24 and the key distribution server 23 notifies the smartphone 22 that registration has been completed, the control unit 55 controls the display unit 54 to cause the display unit 54 to display a registration completion screen indicated by an arrow Q44.

On the registration completion screen indicated by the arrow Q44, a text message is displayed, indicating that registration of the IC card 21 has been completed. When seeing this text message, the user can know that registration has been completed.

As described above, the information processing system 11 can provide the use cases described with reference to Figs. 2 and 3, and can use any IC card 21 as a backup digital key of the vehicle 24. In other words, the user can use an existing IC card 21 already owned by the user as a backup digital key.

Therefore, the user does not need to carry a separate IC card dedicated to backup in, for example, a wallet, thereby improving convenience.

In the information processing system 11, the access key of the IC card 21 can be stored in a secure area called the secure element 82 of the vehicle 24.

Therefore, the doors of the vehicle 24 can be opened and closed, the engine can be started, and so on, even when the vehicle 24 is not connected to the key distribution server 23, that is, when the vehicle 24 is offline.

There may be a case where the vehicle 24 is a connected car.

In the case where the vehicle 24 is a connected car, the vehicle 24 may enter a state in which it cannot connect to the network (offline state) due to some reason, such as a network failure or being outside the network range. However, in the information processing system 11, even when the vehicle 24 is offline, the doors can be opened and closed, the engine can be started, and so on, by using the access key held by the vehicle 24.

Furthermore, since the information processing system 11 is configured not to hold the master key on the vehicle 24 side, it is possible to reduce the scope of the impact when the key managed on the vehicle 24 side is leaked. In other words, it is possible to improve security.

Specifically, even if the access key is leaked from the vehicle 24 due to unauthorized access, the scope of the impact of the leak can be limited to a specific IC card 21 used as a backup for the vehicle 24, so that the entire information processing system 11 is not affected.

Additionally, in the information processing system 11, even when an IC card 21 issued by another issuer, such as a transportation IC card, other than a card issued by the automobile manufacturer, is used as a backup digital key, there is no need to share a master key between the automobile manufacturer and the card issuer. This makes it easier for business operators to cooperate with each other.

Although an example is described herein in which the IC card 21 is registered to the key distribution server 23 using the smartphone 22, the vehicle 24 may be connected to the key distribution server 23 to register the IC card 21, as illustrated in Fig. 6, for example.

In the example of Fig. 6, a display unit 121 is provided in a console portion or the like inside the vehicle 24 as illustrated in the lower center of the figure. In the vehicle 24, a control unit (not illustrated) is also provided that corresponds to the control unit 55 of the smartphone 22.

In this case, a registration screen is displayed on the display unit 121 of the vehicle 24, and the user registers the IC card 21 while performing operations on the registration screen.

That is, when the user holds the IC card 21 over the console portion of the vehicle 24, the vehicle 24 reads an identifier from the IC card 21 through NFC.

Specifically, the vehicle 24 requests the IC card 21 to transmit an identifier, and the IC card 21 transmits the identifier to the smartphone 22 in response to the request. The NFC communication control unit 85 of the vehicle 24 receives the identifier transmitted from the IC card 21 in this manner.

The vehicle 24 transmits the identifier received from the IC card 21 to the key distribution server 23, and the key distribution server 23 generates an access key corresponding to the identifier of the IC card 21 based on the identifier of the IC card 21 received from the vehicle 24 and a master key that is recorded in advance.

The key distribution server 23 then distributes (transmits) the identifier of the IC card 21 and the generated access key to the vehicle 24. The vehicle 24 stores the identifier and access key distributed by the key distribution server 23 in the access key storage unit 91 in association with each other.

By distributing the access key in this manner, the IC card 21 is registered in the key distribution server 23, and the user is allowed to use the IC card 21 as a backup digital key of the vehicle 24.

When registering the IC card 21, a registration screen illustrated in Fig. 7 is displayed on the display unit 121 of the vehicle 24.

In the example illustrated in Fig. 6, for example, when the user wishes to register the IC card 21, the user first operates an input unit (not illustrated) of the vehicle 24 to cause the display unit 121 to display a registration screen as indicated by an arrow Q51. This registration screen is the same as the registration screen indicated by the arrow Q41 in Fig. 5.

When the user specifies the specification operation and validity period on the registration screen indicated by the arrow Q51 and performs an operation to confirm the specification, the control unit controls the display unit 121 to cause the display unit 121 to display a screen indicated by an arrow Q52. This causes the display screen to change from the registration screen indicated by the arrow Q51 to the screen indicated by the arrow Q52.

On the screen indicated by the arrow Q52, a text message and an image are displayed, encouraging the user to hold the IC card 21 to be registered over the console portion of the vehicle 24, and the user then holds the IC card 21 over the console portion in accordance with the text message and image.

Then, NFC (short-range wireless communication) is performed between the vehicle 24 and the IC card 21, and the identifier of the IC card 21 is read out as described above. The read identifier is then transmitted from the network communication control unit 81 of the vehicle 24 to the key distribution server 23 together with specification operation information indicating the specification operation specified by the user and validity period information indicating the validity period.

When the identifier is read, the control unit controls the display unit 121 to cause the display unit 121 to display a screen indicated by an arrow Q53.

The screen indicated by the arrow Q53 is the same as the screen indicated by the arrow Q43 in Fig. 5, and on the screen indicated by the arrow Q53, a text message is displayed, informing the user that the IC card 21 is being registered and urging the user to move the IC card 21 away from the console portion.

When the access key of the IC card 21 is recorded in the vehicle 24, the control unit controls the display unit 121 to cause the display unit 121 to display a registration completion screen indicated by an arrow Q54. The registration completion screen indicated by the arrow Q54 is the same as the registration completion screen indicated by the arrow Q44 in Fig. 5.

As described above, even when registering the IC card 21 using the vehicle 24, the use cases described with reference to Figs. 2 and 3 can be provided, and any IC card 21 can be used as a backup digital key of the vehicle 24. In this case, some of the modules constituting the vehicle 24, such as the display unit 121 provided in the console portion of the vehicle 24, function as an information processing device that registers the IC card 21.

### (Operation of Information Processing System)

Subsequently, an operation of the information processing system 11 will be described.

In particular, processing performed by the information processing system 11 when registering the IC card 21 will be described below with reference to a flowchart of Fig. 8.

In this case, the information processing system 11 performs registration request processing by the smartphone 22, transmission processing by the IC card 21, key distribution processing by the key distribution server 23, and key recording processing by the vehicle 24.

For example, on the smartphone 22, a specification operation and a validity period are specified on the registration screen indicated by the arrow Q41 in Fig. 5, and then when the screen indicated by the arrow Q42 is displayed on the display unit 54, the user holds the user's own IC card 21 over the smartphone 22.

Then, NFC (short-range wireless communication) is started between the IC card 21 and the smartphone 22. Specifically, the smartphone 22 starts registration request processing, and the IC card 21 starts transmission processing.

When the registration request processing is started on the smartphone 22, then in step S11, the NFC communication control unit 56 transmits a transmission request to request transmission of an identifier to the IC card 21 through short-range wireless communication in accordance with an instruction from the control unit 55.

Then, in step S31, the NFC communication control unit 41 of the IC card 21 receives the transmission request transmitted from the smartphone 22, and supplies the transmission request to the encryption calculation unit 42.

In step S32, the encryption calculation unit 42 reads the identifier of the IC card 21 from the identifier/key storage unit 43 in response to the transmission request, and supplies the identifier to the NFC communication control unit 41.

In step S33, the NFC communication control unit 41 transmits the identifier supplied from the encryption calculation unit 42 to the smartphone 22 through short-range wireless communication.

When the identifier of the IC card 21 is transmitted to the smartphone 22 in this manner, then the transmission processing by the IC card 21 ends.

When the identifier is transmitted from the IC card 21, the smartphone 22 performs processing of step S12.

In step S12, the NFC communication control unit 56 receives the identifier transmitted from the IC card 21, and supplies the identifier to the control unit 55.

The control unit 55 then generates a registration request including the identifier of the IC card 21 supplied from the NFC communication control unit 56 and requesting registration of the IC card 21.

For example, the registration request includes, in addition to the identifier of the IC card 21, as necessary, specification operation information indicating a specification operation specified on the registration screen, validity period information indicating a validity period, and vehicle specification information indicating the vehicle 24 specified by the user.

For example, the vehicle specification information is information indicating the vehicle 24 to be operated by the IC card 21 to be registered, which is specified by the user operating the input unit 53 while a registration screen or the like is displayed.

Therefore, the registration request can be said to be information for requesting registration of the IC card 21 as a backup digital key of the vehicle 24 indicated by the vehicle specification information.

When the control unit 55 generates a registration request including the identifier of the IC card 21 and, as necessary, stored specification operation information, and validity period information, vehicle specification information, the control unit 55 supplies the registration request to the network communication control unit 51 and instructs to transmit the registration request to the key distribution server 23.

In step S13, the network communication control unit 51 transmits the registration request including the identifier of the IC card 21 and others, which is supplied from the control unit 55, to the key distribution server 23. When the registration request is transmitted, for example, the control unit 55 controls the display unit 54 to cause the display unit 54 to display the screen indicated by the arrow Q43 in Fig. 5.

When the registration request is transmitted from the smartphone 22 to the key distribution server 23, the key distribution server 23 starts key distribution processing.

Specifically, in step S51, the network communication control unit 71 of the key distribution server 23 receives the registration request transmitted from the smartphone 22, and supplies the registration request to the access key calculation module 72.

In step S52, the access key calculation module 72 generates an access key for enabling the IC card 21 to function as a backup digital key, based on the identifier of the IC card 21 included in the registration request supplied from the network communication control unit 71.

Specifically, the access key calculation module 72 reads a master key common to all IC cards 21 from the security module 73, and calculates (generates) an access key for the IC card 21 based on the read master key and the identifier of the IC card 21 included in the registration request.

The access key calculation module 72 supplies the identifier of the IC card 21 included in the registration request and the generated access key to the network communication control unit 71, and instructs to transmit them to the vehicle 24 indicated by the vehicle specification information included in the registration request as appropriate.

In this case, for example, the vehicle specification information and information for accessing the vehicle 24 indicated by the vehicle specification information may be associated with each other in advance and recorded in the security module 73. The vehicle specification information may include information for accessing the vehicle 24 indicated by the vehicle specification information.

The method of identifying the vehicle 24 to which the access key is to be transmitted is not limited to the method using the vehicle specification information, and any other method may be used. If the registration request includes specification operation information, validity period information, and the like, the access key calculation module 72 supplies the specification operation information, the validity period information, and the like to the network communication control unit 71 to transmit them to the vehicle 24.

In step S53, the network communication control unit 71 transmits the identifier and access key supplied from the access key calculation module 72 to the vehicle 24. At this time, the network communication control unit 71 also transmits the specification operation information, the validity period information, and the like to the vehicle 24 as necessary.

When the identifier and access key are transmitted, the vehicle 24 performs key recording processing.

Specifically, in step S71, the network communication control unit 81 of the vehicle 24 receives the identifier and access key of the IC card 21 transmitted from the key distribution server 23, and supplies them to the secure element 82.

In step S72, the access key storage unit 91 of the secure element 82 records the identifier and access key supplied from the network communication control unit 81 in association with each other.

If the specification operation information, the validity period information, and the like are received together with the access key in step S71, the access key storage unit 91 also records the specification operation information, the validity period information, and the like. As a result, when the IC card 21 is actually used as a backup digital key, operations are performed in accordance with the specification operation information and the validity period information.

Specifically, for example, in the authentication as described with reference to Fig. 3, if the timing (date) of the authentication is outside the validity period indicated by the validity period information of the IC card 21 to be communicated with, the authentication is determined to have failed. Even if the authentication is successful, no operations other than the specification operation indicated by the specification operation information are executed.

When the identifier and the access key are recorded in the access key storage unit 91, the secure element 82 generates a recording completion notification indicating that the recording of the identifier and the access key has been completed, and supplies the notification to the network communication control unit 81.

In step S73, the network communication control unit 81 transmits the recording completion notification supplied from the secure element 82 to the key distribution server 23, and then the key recording processing ends.

When the recording completion notification is transmitted, the key distribution server 23 performs processing of step S54.

In step S54, the network communication control unit 71 receives the recording completion notification transmitted from the vehicle 24, and supplies the recording completion notification to the access key calculation module 72.

The access key calculation module 72 can recognize, by the recording completion notification from the network communication control unit 71, that the identifier and access key of the IC card 21 have been recorded in the vehicle 24.

If necessary, the access key calculation module 72 performs processing such as recording in the security module 73 the identifier, access key, vehicle specification information, specification operation information, and validity period information in association with each other, thereby completing the registration of the IC card 21.

The access key calculation module 72 generates a registration completion notification indicating that the registration of the IC card 21 has been completed, and supplies the registration completion notification to the network communication control unit 71.

In step S55, the network communication control unit 71 transmits the registration completion notification supplied from the access key calculation module 72 to the smartphone 22, and then the key distribution processing ends.

When the processing of step S55 has been performed, the smartphone 22 performs processing of step S14.

Specifically, in step S14, the network communication control unit 51 receives the registration completion notification transmitted from the key distribution server 23, and supplies the registration completion notification to the control unit 55.

The control unit 55 then causes the display unit 54 to display a message corresponding to the registration completion notification supplied from the network communication control unit 51, and notifies the user that the registration has been completed. Accordingly, on the display unit 54, for example, the registration completion screen indicated by the arrow Q44 in Fig. 5 is displayed. In this way, when the user is notified of the completion of registration, the registration request processing ends.

As described above, in the information processing system 11, an access key is generated based on the identifier read from the IC card 21, and the identifier and the access key are recorded in the vehicle 24.

By doing this, the use cases described with reference to Figs. 2 and 3 can be provided in which any IC card 21 is used as a backup digital key of the vehicle 24, thereby improving convenience.

Moreover, in the information processing system 11, the IC card 21 can be used as a backup digital key even when the vehicle 24 is offline, and there is no need to hold a master key in the vehicle 24, thereby improving security.

### <Modification Example of First Embodiment>

### <Signature for Identifier>

When the smartphone 22 is used as a digital key of the vehicle 24, processing called owner pairing is performed between the smartphone 22 and the vehicle 24. In the owner pairing, out of a pair of secret and public keys used as digital keys in a public-key cryptosystem, the public key is exchanged between the smartphone 22 and the vehicle 24.

When registering the IC card 21 using the smartphone 22, if a digital key held by the smartphone 22 is used, unauthorized registration of the IC card 21 can be prevented, and security can be further improved.

When using digital keys obtained by the owner pairing to register the IC card 21, for example, in the information processing system 11, an access key is generated and distributed as roughly illustrated in Fig. 9.

In this example, as illustrated in the lower left of the figure, the digital key storage unit 61 in the secure element 52, such as an embedded Secure Element (eSE) in the smartphone 22, stores digital keys that have already been exchanged (shared) by owner pairing.

In this example, a key drawn with the letter "S" represents the secret key of the smartphone 22 as a digital key, and a key drawn with the letter "P" represents the public key of the smartphone 22 as a digital key.

As illustrated in the lower right of the figure, the public key of the smartphone 22 as a digital key has already been recorded (stored) in the digital key storage unit 93 of the vehicle 24 by owner pairing.

In this state, when the smartphone 22 and the IC card 21 perform NFC and the processing for registering the IC card 21 is started, the smartphone 22 reads an identifier unique to the IC card 21 from the IC card 21, as illustrated in the lower left of the figure.

Specifically, the smartphone 22 requests the IC card 21 to transmit an identifier, and the IC card 21 transmits the identifier to the smartphone 22 in response to the request.

The smartphone 22 then receives the identifier from the IC card 21, and attaches a signature to the received identifier.

Specifically, the smartphone 22 generates a signature for the identifier of the IC card 21 based on the identifier of the IC card 21 and the secret key of the smartphone 22 as a digital key held in advance. In other words, the identifier is signed based on the secret key.

The smartphone 22 transmits to the key distribution server 23 the identifier of the IC card 21 with the generated signature attached. More specifically, the above-described vehicle specification information, specification operation information, validity period information, and the like are also transmitted to the key distribution server 23 as necessary.

When the key distribution server 23 receives the identifier with the signature attached from the smartphone 22, the key distribution server 23 generates an access key corresponding to the identifier of the IC card 21 based on the received identifier of the IC card 21 and a master key common to all the IC cards 21 that is recorded in advance.

The key distribution server 23 then distributes (transmits) the identifier with the signature attached and the generated access key to the vehicle 24.

When the vehicle 24 receives the identifier and access key distributed by the key distribution server 23, the vehicle 24 verifies the signature attached to the identifier based on the received identifier of the IC card 21 and the public key of the smartphone 22 as a digital key that is recorded in advance in the digital key storage unit 93.

If the signature verification result indicates that the signature is valid, that is, if the signature verification is successful, the vehicle 24 stores in the access key storage unit 91 the identifier and access key distributed by the key distribution server 23 in association with each other.

By distributing the access key in this manner, the IC card 21 is registered in the key distribution server 23, and the user is allowed to use the IC card 21 as a backup digital key of the vehicle 24.

In particular, in this example, registration of the IC card 21 is not possible without using the smartphone 22 that functions as a digital key, and unauthorized registration of the IC card 21 can be prevented by performing signature verification also on the vehicle 24 side, thereby improving security.

In the example described with reference to Fig. 9, when registering the IC card 21, for example, each screen illustrated in Fig. 5 is displayed on the smartphone 22.

### (Operation of Information Processing System)

As described with reference to Fig. 9, the information processing system 11 performs processing illustrated in Fig. 10, to register the IC card 21 using a digital key.

Hereinafter, the processing to register the IC card 21, performed by the information processing system 11, will be described with reference to a flowchart of Fig. 10.

In this case, the information processing system 11 performs registration request processing by the smartphone 22, transmission processing by the IC card 21, key distribution processing by the key distribution server 23, and key recording processing by the vehicle 24.

For example, as in the case of Fig. 8, when the user holds the IC card 21 over the smartphone 22 while the screen indicated by the arrow Q42 in Fig. 5 is displayed on the smartphone 22, registration request processing by the smartphone 22 and transmission processing by the IC card 21 are started.

Processing of steps S101 and S102 of the registration request processing by the smartphone 22 is the same as the processing of steps S11 and S12 in Fig. 8, and thus the description thereof will be omitted.

Similarly, the transmission processing by the IC card 21, that is, processing of steps S131 to S133, is the same as the processing of steps S31 to S33 in Fig. 8, and thus the description thereof will be omitted.

When the smartphone 22 receives the identifier from the IC card 21 in step S102, then the smartphone 22 performs processing of step S103.

In step S103, the digital key control unit 62 generates, in accordance with an instruction from the control unit 55, a signature for the identifier of the IC card 21 received by the NFC communication control unit 56, and attaches the generated signature to the identifier.

Specifically, the digital key control unit 62 generates a signature for the identifier of the IC card 21 based on the identifier of the IC card 21 and the secret key of the smartphone 22 as a digital key recorded in the digital key storage unit 61, and attaches (adds) the signature to the identifier.

The digital key control unit 62 then supplies to the control unit 55 the identifier with the signature attached. The control unit 55 generates a registration request including the identifier supplied from the digital key control unit 62, supplies the registration request to the network communication control unit 51, and instructs to transmit the registration request to the key distribution server 23.

In this case, as in the example described with reference to Fig. 8, the specification operation information, validity period information, vehicle specification information, and the like are also stored in the registration request as necessary.

When the processing of step S103 has been performed, processing of step S104 is performed, and a registration request is transmitted to the key distribution server 23. The processing of step S104 is the same as the processing of step S13 illustrated in Fig. 8, and thus the description thereof will be omitted.

When the registration request is transmitted, the key distribution processing is started in the key distribution server 23, and processing of steps S151 to S153 are performed. That processing is the same as the processing of steps S51 to S53 in Fig. 8, and thus the description will be omitted. However, in step S153, the identifier and the access key are distributed with a signature attached to the identifier.

When the processing of step S153 to transmit the identifier with the signature attached and the access key has been performed, the key recording processing is started in the vehicle 24.

When the key recording processing is started, step S171 is performed, and the network communication control unit 81 of the vehicle 24 receives the identifier and access key of the IC card 21 transmitted from the key distribution server 23, and supplies them to the secure element 82. In other words, in step S171, the same processing as in step S71 in Fig. 8 is performed.

In step S172, the digital key control unit 94 of the secure element 82 verifies the signature attached to the identifier based on the identifier supplied from the network communication control unit 81 and the public key of the smartphone 22 as a digital key recorded in the digital key storage unit 93.

Then, if the signature verification is successful, then processing of steps S173 and S174 is performed and the key recording processing ends. Such processing is the same as the processing of steps S72 and S73 in Fig. 8, and thus the description thereof will be omitted.

However, if the signature verification fails in step S172, the processing of step S173 is not performed, and in step S174, a notification indicating that an error has occurred is transmitted to the key distribution server 23.

In other words, the identifier and the access key are recorded in the access key storage unit 91 only if the signature verification is successful, and if the signature verification fails, the identifier and the access key are discarded without being recorded in the access key storage unit 91.

When a recording completion notification is transmitted in the processing of step S174, the key distribution server 23 performs processing of steps S154 and S155 to transmit a registration completion notification to the smartphone 22, and then the key distribution processing ends.

Furthermore, the smartphone 22 performs processing of step S105 so that the user is notified of the completion of the registration, and then the registration request processing ends.

The processing of steps S154 and S155 is the same as the processing of steps S54 and S55 in Fig. 8, the processing of step S105 is the same as the processing of step S14 in Fig. 8, and thus the description thereof will be omitted.

As described above, in the information processing system 11, a signature is attached to the identifier of the IC card 21, and the signature is verified on the vehicle 24 side. By doing so, unauthorized registration of the IC card 21 can be prevented, and security can be improved.

### <Second Embodiment>

### <Supply of Public Key>

An example has been described above in which the access key of the IC card 21 is stored on the vehicle 24 side and the IC card 21 functions as a backup digital key.

However, the IC card 21 may also record asymmetric encryption keys (pair of asymmetric keys) for that IC card 21, such as a secret key and a public key in a public-key cryptosystem based on a public key infrastructure (PKI).

Therefore, in a case where a secret key and a public key are recorded (stored) in the IC card 21, the public key of the IC card 21 may be stored on the vehicle 24 side so that the IC card 21 functions as a backup digital key.

In this case, when the IC card 21 is used as a backup digital key, for example, when the authentication described with reference to Fig. 3 is performed, the public key of the IC card 21 is used instead of the access key.

When the public key of the IC card 21 is used to enable the IC card 21 to function as a backup digital key, the public key is distributed as roughly illustrated in Fig. 11.

In the example of Fig. 11, as in the example illustrated in Fig. 9 as the premise, the secret key and public key of the smartphone 22 are recorded as digital keys in the smartphone 22, and the public key of the smartphone 22 exchanged by owner pairing is recorded in the vehicle 24.

In the example of Fig. 11, a secret key and a public key that make a pair in a public-key cryptosystem for the IC card 21 are recorded in the IC card 21.

First, as illustrated in the lower left of the figure, the smartphone 22 reads the identifier and public key of the IC card 21 from the IC card 21 through NFC.

Specifically, the smartphone 22 requests the IC card 21 to transmit an identifier and a public key, and the IC card 21 transmits the identifier and its own public key to the smartphone 22 in response to the request.

The smartphone 22 then receives the identifier and the public key from the IC card 21, and attaches a common signature to the received identifier and public key.

Specifically, the smartphone 22 generates a common signature for the identifier and public key of the IC card 21 based on the identifier and public key of the IC card 21 and the secret key of the smartphone 22 as a digital key held in advance. In other words, the identifier and public key of the IC card 21 are signed based on the secret key of the smartphone 22.

The smartphone 22 transmits to the key distribution server 23 the identifier and public key of the IC card 21 with the generated signature attached. More specifically, the above-described vehicle specification information, specification operation information, validity period information, and the like are also transmitted to the key distribution server 23 as necessary.

When the key distribution server 23 receives the identifier and public key with the signature attached from the smartphone 22, the key distribution server 23 verifies whether the received public key of the IC card 21 is valid.

For example, an electronic certificate for the public key of the IC card 21, which is issued by a certification authority (CA) which is a third party organization, has been attached (added) to the public key of the IC card 21. Thus, the smartphone 22 transmits to the key distribution server 23 the public key with the electronic certificate attached.

The key distribution server 23 verifies the public key of the IC card 21 by transmitting the electronic certificate attached to the public key of the IC card 21 received from the smartphone 22 to the certification authority's server to check the validity of the electronic certificate.

If the verification result indicates that the public key of the IC card 21 is valid, the key distribution server 23 distributes (transmits) the identifier and public key of the IC card 21 received from the smartphone 22 to the vehicle 24.

When the vehicle 24 receives the identifier and public key distributed by the key distribution server 23, the vehicle 24 verifies the signature attached to the identifier and public key based on the received identifier and public key of the IC card 21 and the public key of the smartphone 22 as a digital key that is recorded in advance in the digital key storage unit 93.

If the signature verification result indicates that the signature is valid, that is, if the signature verification is successful, the vehicle 24 records the identifier and public key of the IC card 21 distributed by the key distribution server 23 in association with each other.

By distributing the public key in this manner, the IC card 21 is registered in the key distribution server 23 as a backup digital key.

After the public key is distributed in the manner described above, the user is allowed to use the IC card 21 as a backup digital key of the vehicle 24. Using the IC card 21, when the user holds the IC card 21 over the vehicle 24, the same processing as the authentication processing described with reference to Fig. 3 is performed based on the secret key and public key of the IC card 21.

In the example described with reference to Fig. 11, when registering the IC card 21, for example, each screen illustrated in Fig. 5 is displayed on the smartphone 22.

### <Configuration Example of Information Processing System>

When the public key of the IC card 21 is used as described above, the information processing system 11 is configured as illustrated in Fig. 12, for example. In Fig. 12, parts corresponding to those in Fig. 1 are denoted by the same reference numerals, and the description thereof will be appropriately omitted.

The information processing system 11 illustrated in Fig. 12 includes an IC card 21, a smartphone 22, a key distribution server 23, and a vehicle 24.

In particular, in this example, the configurations of the IC card 21 and the smartphone 22 are the same as those in Fig. 1.

However, in this example, the identifier/key storage unit 43 of the IC card 21 records the identifier of the IC card 21 and the secret key and public key of the IC card 21. In particular, the above-described electronic certificate has been attached (added) to the public key of the IC card 21.

In this case, the master key or access key of the IC card 21 do not need to be recorded in the identifier/key storage unit 43.

The key distribution server 23 includes a network communication control unit 71, a control module 191, and a security module 73.

The control module 191 controls the overall operation of the key distribution server 23. For example, the control module 191 verifies the public key of the IC card 21, that is, verifies the validity of the electronic certificate of the public key.

In the example of Fig. 12, the configuration of the key distribution server 23 differs from that of Fig. 1 in that the control module 191 is provided instead of the access key calculation module 72. In this example, the master key of the IC card 21 does not need to be recorded in the security module 73.

The vehicle 24 includes a network communication control unit 81, a secure element 82, an engine control unit 83, a door control unit 84, an NFC communication control unit 85, and a BLE/UWB communication control unit 86.

The secure element 82 includes a public key storage unit 201, a public key control unit 202, a digital key storage unit 93, and a digital key control unit 94.

Therefore, the configuration of the vehicle 24 illustrated in Fig. 12 differs from that illustrated in Fig. 1 in that the public key storage unit 201 and the public key control unit 202 are provided instead of the access key storage unit 91 and the access key control unit 92.

The public key storage unit 201 records the identifier and public key of the IC card 21 distributed from the key distribution server 23 in association with each other.

The public key control unit 202 performs various types of processing such as authentication with the IC card 21 by using the public key of the IC card 21 recorded (stored) in the public key storage unit 201.

### (Operation of Information Processing System)

As described with reference to Fig. 11, when the public key of the IC card 21 is used, the information processing system 11 performs processing illustrated in Fig. 13.

Hereinafter, the processing to register the IC card 21, performed by the information processing system 11, will be described with reference to a flowchart of Fig. 13.

In this case, the information processing system 11 performs registration request processing by the smartphone 22, transmission processing by the IC card 21, key distribution processing by the key distribution server 23, and key recording processing by the vehicle 24.

For example, as in the case of Fig. 8, when the user holds the IC card 21 over the smartphone 22 while the screen indicated by the arrow Q42 in Fig. 5 is displayed on the smartphone 22, registration request processing by the smartphone 22 and transmission processing by the IC card 21 are started.

When the registration request processing is started on the smartphone 22, then in step S201, the NFC communication control unit 56 transmits a transmission request to request transmission of an identifier and a public key to the IC card 21 through short-range wireless communication in accordance with an instruction from the control unit 55.

Then, in step S231, the NFC communication control unit 41 of the IC card 21 receives the transmission request transmitted from the smartphone 22, and supplies the transmission request to the encryption calculation unit 42.

In step S232, the encryption calculation unit 42 reads the identifier and public key of the IC card 21 from the identifier/key storage unit 43 in response to the transmission request, and supplies them to the NFC communication control unit 41.

In step S233, the NFC communication control unit 41 transmits the identifier and public key supplied from the encryption calculation unit 42 to the smartphone 22 through short-range wireless communication. In this case, the public key is transmitted to the smartphone 22 together with the electronic certificate attached thereto.

When the identifier and public key of the IC card 21 are transmitted to the smartphone 22, then the transmission processing by the IC card 21 ends.

When the identifier and the public key are transmitted from the IC card 21, the smartphone 22 performs processing of step S202.

In step S202, the NFC communication control unit 56 receives the identifier and public key transmitted from the IC card 21, and supplies them to the control unit 55.

In step S203, the digital key control unit 62 generates, in accordance with an instruction from the control unit 55, a signature for the identifier and public key of the IC card 21 received by the NFC communication control unit 56, and attaches the generated signature to the identifier and public key.

Specifically, the digital key control unit 62 generates a signature for the identifier and public key of the IC card 21 based on the identifier and public key of the IC card 21 and the secret key of the smartphone 22 as a digital key recorded in the digital key storage unit 61, and attaches (adds) the signature to the identifier and public key.

The digital key control unit 62 then supplies to the control unit 55 the identifier and public key with the signature attached. The control unit 55 generates a registration request including the identifier and public key supplied from the digital key control unit 62, supplies the registration request to the network communication control unit 51, and instructs to transmit the registration request to the key distribution server 23.

In this case, as in the example described with reference to Fig. 8, the specification operation information, validity period information, vehicle specification information, and the like are also stored in the registration request as necessary.

In step S204, the network communication control unit 51 transmits the registration request including the identifier and public key of the IC card 21 and others, which is supplied from the control unit 55, to the key distribution server 23. When the registration request is transmitted, for example, the control unit 55 controls the display unit 54 to cause the display unit 54 to display the screen indicated by the arrow Q43 in Fig. 5.

When the registration request is transmitted from the smartphone 22 to the key distribution server 23, the key distribution server 23 starts key distribution processing.

Specifically, in step S251, the network communication control unit 71 of the key distribution server 23 receives the registration request transmitted from the smartphone 22, and supplies the registration request to the control module 191.

In step S252, the control module 191 verifies the public key of the IC card 21 included in the registration request supplied from the network communication control unit 71.

Specifically, the control module 191 supplies the electronic certificate attached to the public key to the network communication control unit 71, which transmits the electronic certificate to the certificate authority's server to check the validity of the electronic certificate.

The certificate authority's server then transmits a result of checking the validity of the electronic certificate to the key distribution server 23, and the network communication control unit 71 receives the check result and supplies it to the control module 191.

The control module 191 confirms the check result supplied from the network communication control unit 71 to obtain a verification result as to whether the public key of the IC card 21 is valid.

If the verification result indicates that the public key of the IC card 21 is valid, that is, if the verification of the public key is successful, the control module 191 distributes the identifier and public key of the IC card 21.

Specifically, the control module 191 supplies the identifier and public key of the IC card 21 included in the registration request to the network communication control unit 71, and instructs to transmit them to the vehicle 24 indicated by the vehicle specification information included in the registration request as appropriate.

If the verification of the public key fails, the control module 191 does not distribute the identifier and the public key, and controls the network communication control unit 71 to transmit a notification indicating that an error has occurred to the smartphone 22.

In step S253, the network communication control unit 71 transmits the identifier and public key supplied from the control module 191 to the vehicle 24. At this time, the network communication control unit 71 also transmits the specification operation information, the validity period information, and the like to the vehicle 24 as necessary.

When the identifier and the public key are transmitted, the vehicle 24 performs key recording processing.

Specifically, in step S271, the network communication control unit 81 of the vehicle 24 receives the identifier and access key of the IC card 21 transmitted from the key distribution server 23, and supplies them to the secure element 82.

In step S272, the digital key control unit 94 of the secure element 82 verifies the signature attached to the identifier and public key based on the identifier and public key supplied from the network communication control unit 81 and the public key of the smartphone 22 as a digital key recorded in the digital key storage unit 93.

If the signature verification is successful, processing of step S273 is then performed.

In step S273, the public key storage unit 201 of the secure element 82 records the identifier and public key supplied from the network communication control unit 81 in association with each other.

If the specification operation information, the validity period information, and the like are received together with the public key in step S271, the public key storage unit 201 also records the specification operation information, the validity period information, and the like.

If the verification of the signature attached to the identifier and public key fails, the identifier and public key are not recorded, and a notification indicating that an error has occurred is transmitted to the key distribution server 23.

When the identifier and public key are recorded in the public key storage unit 201, the secure element 82 generates a recording completion notification indicating that the recording of the identifier and public key has been completed, and supplies the notification to the network communication control unit 81.

In step S274, the network communication control unit 81 transmits the recording completion notification supplied from the secure element 82 to the key distribution server 23, and then the key recording processing ends.

When the recording completion notification is transmitted, the key distribution server 23 performs processing of steps S254 and S255 to transmit a registration completion notification to the smartphone 22, and then the key distribution processing ends.

Furthermore, the smartphone 22 performs processing of step S205 so that the user is notified of the completion of the registration, and then the registration request processing ends.

The processing of steps S254 and S255 is the same as the processing of steps S54 and S55 in Fig. 8, the processing of step S205 is the same as the processing of step S14 in Fig. 8, and thus the description thereof will be omitted.

As described above, in the information processing system 11, the identifier and public key read from the IC card 21 are distributed to the vehicle 24 by the key distribution server 23.

By doing this, the use cases can be provided in which any IC card 21 is used as a backup digital key of the vehicle 24, thereby improving convenience.

Moreover, in the information processing system 11, the IC card 21 can be used as a backup digital key even when the vehicle 24 is offline, and there is no need to hold a master key in the vehicle 24, thereby improving security.

In the above, an example has been described in which the present technology is applied to the information processing system 11 including the vehicle 24. However, the present technology is not limited to this, and may be applied to any other system. Therefore, the device to be operated by the IC card 21 (operation target device) is not limited to the vehicle 24, and may be any other device.

Specifically, for example, there may be an example in which a device corresponding to the smartphone 22, installed at the front desk of a hotel may be used to register the IC card 21 owned by the user who is a guest as a key of a hotel room. In this case, a module provided on a door of the hotel room corresponds to the vehicle 24, and the module authenticates the IC card 21 to open and close the door.

For example, an owner of a key of a door of a personal house may generate new keys for his/her family members from the IC card 21, which is an existing plastic card.

In this case, a module installed on the door of the owner's house corresponds to the vehicle 24, and one or more IC cards 21 owned by the owner's family members are registered in the key distribution server 23 as keys for opening and closing the door. The module installed on the door of the house authenticates the registered IC card 21 to open and close the door, that is, unlock and lock the door.

Besides, for example, an IC card 21 of an existing business operator that is owned by a user may be registered in the key distribution server 23 as a car sharing key. In this case, the user uses the IC card 21 registered as a car sharing key to perform operations such as opening and closing doors and starting the engine of a vehicle 24 shared by a plurality of users.

### <Configuration Example of Computer>

The above-described series of processing can also be performed by hardware or software. In the case where the series of processing is performed by software, a program that configures the software is installed on a computer. Here, the computer includes, for example, a computer built in dedicated hardware, a general-purpose personal computer on which various programs are installed to be able to execute various functions, and the like.

Fig. 14 is a block diagram illustrating a configuration example of hardware of the computer that performs the above-described series of processing using a program.

In the computer, a central processing unit (CPU) 501, a read only memory (ROM) 502, and a random access memory (RAM) 503 are connected to one another by a bus 504.

An input/output interface 505 is further connected to the bus 504. An input unit 506, an output unit 507, a recording unit 508, a communication unit 509, and a drive 510 are connected to the input/output interface 505.

The input unit 506 includes a keyboard, a mouse, a microphone, and an imaging element. The output unit 507 includes a display and a speaker. The recording unit 508 includes a hard disk and a nonvolatile memory. The communication unit 509 includes a network interface. The drive 510 drives a removable recording medium 511 such as a magnetic disk, an optical disc, a magneto-optical disk, or a semiconductor memory.

In the computer configured thus, the CPU 501 loads, for example, a program recorded in the recording unit 508 into the RAM 503 through the input/output interface 505 and the bus 504 and executes the program, so that the series of processing is performed.

The program to be executed by the computer (the CPU 501) can be provided in such a manner as to be recorded on, for example, the removable recording medium 511 serving as a packaged medium. The program can also be provided through a wired or wireless transmission medium such as a local area network, the Internet, or digital satellite broadcasting.

In the computer, the program can be installed on the recording unit 508 through the input/output interface 505 by loading the removable recording medium 511 into the drive 510. Furthermore, the program can be received by the communication unit 509 through a wired or wireless transfer medium and installed on the recording unit 508. In addition, the program can be installed in advance on the ROM 502 or the recording unit 508.

The program executed by a computer may be a program that performs processing in time series in order described in the present specification or may be a program that performs processing in parallel or at a necessary timing such as when a called is made.

For example, the present technology may be configured as cloud computing in which a plurality of devices shares and cooperatively processes one function via a network.

Additionally, each step described in the above flowchart can be executed by one device or executed in a shared manner by a plurality of devices.

Furthermore, when a single step includes a plurality of types of processing, the plurality of types of processing included in the single step can be performed by a single device, or in a distributed manner by a plurality of devices.

### [Reference Signs List]

- 11: Information processing system
- 21: IC card
- 22: Smartphone
- 23: Key distribution server
- 24: Vehicle
- 51: Network communication control unit
- 52: Secure element
- 54: Display unit
- 55: Control unit
- 71: Network communication control unit
- 72: Access key calculation module
- 81: Network communication control unit
- 82: Secure element

## Claims

1. An information processing system (11) comprising: an information processing device (22); a distribution server (23); and an operation target device (24) to be operated by an IC card (21), wherein
the information processing device (22) includes:
a first digital key storage unit (61) that records a digital key used to perform an operation on the operation target device, the digital key having been exchanged by owner pairing between the information processing device and the operation target device; and
a first digital key control unit (62) that attaches a signature to an identifier and a public key of the IC card that are read from the IC card, based on the digital key; and
a first communication control unit (51) that transmits to the distribution server (23) the identifier and the public key with the signature attached,
the distribution server (23) further includes:
a second communication control unit (71) that receives the identifier and the public key with the signature attached, which are transmitted by the first communication control unit (51), and transmits to the operation target device (24) the identifier and the public key with the signature attached, and
the operation target device (24) includes:
a third communication control unit (81) that receives the identifier and the public key with the signature attached, which are transmitted by the second communication control unit (71);
a second digital key storage unit (93) that records the digital key, including the public key of the information processing device exchanged by owner pairing and recorded in advance in the operation target device; and
a second digital key control unit (94) that verifies the signature based on the digital key; and
a public key storage unit that records the identifier and the public key when verification of the signature is successful.

2. The information processing system according to claim 1, wherein
an electronic certificate is attached to the public key of the IC card,
the distribution server further includes:
a control unit that verifies the public key based on the electronic certificate, and
the second communication control unit transmits to the operation target device the identifier and the public key with the signature attached when verification of the public key is successful.

3. The information processing system according to claim 1, wherein the second communication control unit receives specification operation information that is transmitted from the first communication control unit and indicates an operation on the operation target device for which permission is to be given to the IC card, and transmits the specification operation information to the operation target device.

4. The information processing system according to claim 1, wherein the second communication control unit receives validity period information that is transmitted by the first communication control unit and indicates a validity period during which the IC card is allowed to perform an operation on the operation target device, and transmits the validity period information to the operation target device.

5. An information processing method carried out in an information processing system, the system comprising: an information processing device (22); a distribution server (23); and an operation target device (24) to be operated by an IC card (21), wherein the method comprises in the information processing device (22),the steps of:
recording a digital key used to perform an operation on the operation target device, the digital key having been exchanged by owner pairing between the information processing device and the operation target device; and
attaching a signature to an identifier and a public key of the IC card that are read from the IC card, based on the digital key; and
transmitting to the distribution server (23) the identifier and the public key with the signature attached; and in the the distribution server (23), the method comprises:
receiving the identifier and the public key with the signature attached, which are transmitted by the first communication control unit (51), and transmitting to the operation target device (24) the identifier and the public key with the signature attached, and
in the operation target device (24), the method comprises:
receiving the identifier and the public key with the signature attached, which are transmitted by the second communication control unit (71);
recording the digital key, including the public key of the information processing device exchanged by owner pairing and recorded in advance in the operation target device; and
verifying the signature based on the digital key; and
recording the identifier and the public key when verification of the signature is successful.

6. The information processing method according to claim 5, wherein
an electronic certificate is attached to the public key of the IC card,
and the method in the distribution server further comprises:
verifying the public key based on the electronic certificate, and
transmitting to the operation target device the identifier and the public key with the signature attached when verification of the public key is successful.

7. The information processing method according to claim 5, wherein, in the distribution server, the method comprises: receiving specification operation information that is transmitted from the first communication control unit and indicating an operation on the operation target device for which permission is to be given to the IC card, and transmitting the specification operation information to the operation target device.

8. The information processing method according to claim 5, wherein, in the distribution server, the method comprises: receiving validity period information that is transmitted by the first communication control unit and indicates a validity period during which the IC card is allowed to perform an operation on the operation target device, and transmits the validity period information to the operation target device.

## Patentansprüche

1. Informationsverarbeitungssystem (11), umfassend: eine Informationsverarbeitungsvorrichtung (22); einen Verteilungsserver (23); und eine Bedienzielvorrichtung (24), die durch eine IC-Karte (21) zu bedienen ist, wobei
die Informationsverarbeitungsvorrichtung (22) einschließt:
eine erste Speichereinheit (61) für digitale Schlüssel, die einen digitalen Schlüssel aufzeichnet, der verwendet wird, um eine Bedienung auf der Bedienzielvorrichtung durchzuführen, wobei der digitale Schlüssel durch Besitzerkopplung zwischen der Informationsverarbeitungsvorrichtung und der Bedienzielvorrichtung ausgetauscht wurde; und
eine erste Steuereinheit (62) für digitale Schlüssel, die basierend auf dem digitalen Schlüssel eine Signatur an eine Kennung und einen öffentlichen Schlüssel der IC-Karte anfügt, die aus der IC-Karte ausgelesen werden; und
eine erste Kommunikationssteuereinheit (51), die die Kennung und den öffentlichen Schlüssel mit der angefügten Signatur an den Verteilungsserver (23) überträgt,
der Verteilungsserver (23) ferner einschließt:
eine zweite Kommunikationssteuereinheit (71), die die Kennung und den öffentlichen Schlüssel mit der angefügten Signatur empfängt, die durch die erste Kommunikationssteuereinheit (51) übertragen werden, und die Kennung und den öffentlichen Schlüssel mit der angefügten Signatur an die Bedienzielvorrichtung (24) überträgt, und
die Bedienzielvorrichtung (24) einschließt:
eine dritte Kommunikationssteuereinheit (81), die die Kennung und den öffentlichen Schlüssel mit der angefügten Signatur empfängt, die durch die zweite Kommunikationssteuereinheit (71) übertragen werden;
eine zweite Speichereinheit (93) für digitale Schlüssel, die den digitalen Schlüssel aufzeichnet, einschließlich des öffentlichen Schlüssels der Informationsverarbeitungsvorrichtung, der durch Besitzerkopplung ausgetauscht und vorab in der Bedienzielvorrichtung aufgezeichnet wird; und
eine zweite Steuereinheit (94) für digitale Schlüssel, die die Signatur basierend auf dem digitalen Schlüssel verifiziert; und
eine Speichereinheit für öffentliche Schlüssel, die die Kennung und den öffentlichen Schlüssel aufzeichnet, wenn die Verifizierung der Signatur erfolgreich ist.

2. Informationsverarbeitungssystem nach Anspruch 1, wobei ein elektronisches Zertifikat an den öffentlichen Schlüssel der IC-Karte angefügt ist, der Verteilungsserver ferner einschließt:
eine Steuereinheit, die den öffentlichen Schlüssel basierend auf dem elektronischen Zertifikat verifiziert, und die zweite Kommunikationssteuereinheit die Kennung und den öffentlichen Schlüssel mit der angefügten Signatur an die Bedienzielvorrichtung überträgt, wenn die Verifizierung des öffentlichen Schlüssels erfolgreich ist.

3. Informationsverarbeitungssystem nach Anspruch 1, wobei die zweite Kommunikationssteuereinheit Spezifikationsbedienungsinformationen empfängt, die von der ersten Kommunikationssteuereinheit übertragen werden und eine Bedienung an der Bedienzielvorrichtung angeben, für die der IC-Karte eine Berechtigung erteilt werden soll, und die Spezifikationsbedienungsinformationen an die Bedienzielvorrichtung überträgt.

4. Informationsverarbeitungssystem nach Anspruch 1, wobei die zweite Kommunikationssteuereinheit Gültigkeitsdauerinformationen empfängt, die durch die erste Kommunikationssteuereinheit übertragen werden und eine Gültigkeitsdauer angeben, während der die IC-Karte eine Bedienung an der Bedienzielvorrichtung durchführen darf, und die Gültigkeitsdauerinformationen an die Bedienzielvorrichtung überträgt.

5. Informationsverarbeitungsverfahren, das in einem Informationsverarbeitungssystem ausgeführt wird, das System umfassend: eine Informationsverarbeitungsvorrichtung (22); einen Verteilungsserver (23); und eine Bedienzielvorrichtung (24), die durch eine IC-Karte (21) zu bedienen ist, wobei das Verfahren in der Informationsverarbeitungsvorrichtung (22) die Schritte umfasst:
Aufzeichnen eines digitalen Schlüssels, der verwendet wird, um eine Bedienung an der Bedienzielvorrichtung durchzuführen, wobei der digitale Schlüssel durch Besitzerkopplung zwischen der Informationsverarbeitungsvorrichtung und der Bedienzielvorrichtung ausgetauscht wurde; und
Anfügen einer Signatur an eine Kennung und einen öffentlichen Schlüssel der IC-Karte, die aus der IC-Karte ausgelesen werden, basierend auf dem digitalen Schlüssel; und
Übertragen der Kennung und des öffentlichen Schlüssels mit der angefügten Signatur an den Verteilungsserver (23); und in dem Verteilungsserver (23) das Verfahren umfasst:
Empfangen der Kennung und des öffentlichen Schlüssels mit der angefügten Signatur, die durch die erste Kommunikationssteuereinheit (51) übertragen werden, und Übertragen der Kennung und des öffentlichen Schlüssels mit der angefügten Signatur an die Bedienzielvorrichtung (24), und
in der Bedienzielvorrichtung (24) das Verfahren umfasst:
Empfangen der Kennung und des öffentlichen Schlüssels mit der angefügten Signatur, die durch die zweite Kommunikationssteuereinheit (71) übertragen werden;
Aufzeichnen des digitalen Schlüssels, einschließlich des öffentlichen Schlüssels der Informationsverarbeitungsvorrichtung, der durch Besitzerkopplung ausgetauscht und vorab in der Bedienzielvorrichtung aufgezeichnet wird; und
Verifizieren der Signatur basierend auf dem digitalen Schlüssel; und
Aufzeichnen der Kennung und des öffentlichen Schlüssels, wenn die Verifizierung der Signatur erfolgreich ist.

6. Informationsverarbeitungsverfahren nach Anspruch 5, wobei ein elektronisches Zertifikat an den öffentlichen Schlüssel der IC-Karte angefügt ist, und das Verfahren in dem Verteilungsserver ferner umfasst:
Verifizieren des öffentlichen Schlüssels basierend auf dem elektronischen Zertifikat, und
Übertragen der Kennung und des öffentlichen Schlüssels mit der angefügten Signatur an die Bedienzielvorrichtung, wenn die Verifizierung des öffentlichen Schlüssels erfolgreich ist.

7. Informationsverarbeitungsverfahren nach Anspruch 5, wobei, in dem Verteilungsserver, das Verfahren umfasst: Empfangen von Spezifikationsbedienungsinformationen, die von der ersten Kommunikationssteuereinheit übertragen werden und eine Bedienung an der Bedienzielvorrichtung angeben, für die der IC-Karte eine Berechtigung erteilt werden soll, und Übertragen der Spezifikationsbedienungsinformationen an die Bedienzielvorrichtung.

8. Informationsverarbeitungsverfahren nach Anspruch 5, wobei, in dem Verteilungsserver, das Verfahren umfasst: Empfangen von Gültigkeitsdauerinformationen, die durch die erste Kommunikationssteuereinheit übertragen werden und eine Gültigkeitsdauer angeben, während der die IC-Karte eine Bedienung an der Bedienzielvorrichtung durchführen darf, und die Gültigkeitsdauerinformationen an die Bedienzielvorrichtung überträgt.

## Revendications

1. Système de traitement d'informations (11) comprenant : un dispositif de traitement d'informations (22) ; un serveur de distribution (23) ; et un dispositif cible d'opération (24) devant être opéré par une carte à CI (21), dans lequel
le dispositif de traitement d'informations (22) comporte :
une première unité de stockage de clés numériques (61) qui enregistre une clé numérique utilisée pour réaliser une opération sur le dispositif cible d'opération, la clé numérique ayant été échangée par appariement par le propriétaire entre le dispositif de traitement d'informations et le dispositif cible d'opération ; et
une première unité de commande de clé numérique (62) qui joint une signature à un identifiant et une clé publique de la carte à CI qui sont lus à partir de la carte à CI, en fonction de la clé numérique ; et
une première unité de commande de communication (51) qui transmet au serveur de distribution (23) l'identifiant et la clé publique avec la signature jointe,
le serveur de distribution (23) comporte en outre :
une deuxième unité de commande de communication (71) qui reçoit l'identifiant et la clé publique avec la signature jointe, lesquels sont transmis par la première unité de commande de communication (51), et transmet au dispositif cible d'opération (24) l'identifiant et la clé publique avec la signature jointe, et
le dispositif cible d'opération (24) comporte :
une troisième unité de commande de communication (81) qui reçoit l'identifiant et la clé publique avec la signature jointe, qui sont transmis par la deuxième unité de commande de communication (71) ;
une seconde unité de stockage de clés numériques (93) qui enregistre la clé numérique, comportant la clé publique du dispositif de traitement d'informations échangée par l'appariement par le propriétaire et enregistrée à l'avance dans le dispositif cible d'opération ; et
une seconde unité de commande de clé numérique (94) qui vérifie la signature en fonction de la clé numérique ; et
une unité de stockage de clé publique qui enregistre l'identifiant et la clé publique lorsque la vérification de la signature est réussie.

2. Système de traitement d'informations selon la revendication 1, dans lequel un certificat électronique est joint à la clé publique de la carte à CI, le serveur de distribution comporte en outre :
une unité de commande qui vérifie la clé publique en fonction du certificat électronique, et la deuxième unité de commande de communication transmet au dispositif cible d'opération l'identifiant et la clé publique avec la signature jointe lorsque la vérification de la clé publique est réussie.

3. Système de traitement d'informations selon la revendication 1, dans lequel la deuxième unité de commande de communication reçoit des informations d'opération de spécification qui sont transmises par la première unité de commande de communication et indiquent une opération sur le dispositif cible d'opération pour lequel une autorisation doit être donnée à la carte à CI, et transmet les informations d'opération de spécification au dispositif cible d'opération.

4. Système de traitement d'informations selon la revendication 1, dans lequel la deuxième unité de commande de communication reçoit des informations de période de validité qui sont transmises par la première unité de commande de communication et indiquent une période de validité pendant laquelle la carte à CI est autorisée à effectuer une opération sur le dispositif cible d'opération, et transmet les informations de période de validité au dispositif cible d'opération.

5. Procédé de traitement d'informations mis en œuvre dans un système de traitement d'informations, le système comprenant : un dispositif de traitement d'informations (22) ; un serveur de distribution (23) ; et un dispositif cible d'opération (24) devant être opéré par une carte à CI (21), dans lequel le procédé comprend, dans le dispositif de traitement d'informations (22), les étapes consistant à :
enregistrer une clé numérique utilisée pour réaliser une opération sur le dispositif cible d'opération, la clé numérique ayant été échangée par appariement par le propriétaire entre le dispositif de traitement d'informations et le dispositif cible d'opération ; et
joindre une signature à un identifiant et à une clé publique de la carte à CI qui sont lus à partir de la carte à CI, en fonction de la clé numérique ; et
transmettre, au serveur de distribution (23), l'identifiant et la clé publique avec la signature jointe ; et dans le serveur de distribution (23), le procédé comprend :
la réception de l'identifiant et de la clé publique avec la signature jointe, qui sont transmis par la première unité de commande de communication (51), et la transmission au dispositif cible d'opération (24) de l'identifiant et de la clé publique avec la signature jointe, et
dans le dispositif cible d'opération (24), le procédé comprend :
la réception de l'identifiant et de la clé publique avec la signature jointe, qui sont transmis par la deuxième unité de commande de communication (71) ;
l'enregistrement de la clé numérique, comportant la clé publique du dispositif de traitement d'informations échangée par l'appariement par le propriétaire et enregistrée à l'avance dans le dispositif cible d'opération ; et
la vérification de la signature en fonction de la clé numérique ; et
l'enregistrement de l'identifiant et de la clé publique lorsque la vérification de la signature est réussie.

6. Procédé de traitement d'informations selon la revendication 5, dans lequel un certificat électronique est joint à la clé publique de la carte à CI, et le procédé dans le serveur de distribution comprend en outre :
la vérification de la clé publique en fonction du certificat électronique, et
la transmission, au dispositif cible d'opération, de l'identifiant et de la clé publique avec la signature jointe lorsque la vérification de la clé publique est réussie.

7. Procédé de traitement d'informations selon la revendication 5, dans lequel, dans le serveur de distribution, le procédé comprend : la réception d'informations d'opération de spécification qui sont transmises à partir de la première unité de commande de communication et indiquant une opération sur le dispositif cible d'opération pour laquelle une autorisation doit être donnée à la carte à CI, et la transmission des informations d'opération de spécification au dispositif cible d'opération.

8. Procédé de traitement d'informations selon la revendication 5, dans lequel, dans le serveur de distribution, le procédé comprend : la réception d'informations de période de validité qui sont transmises par la première unité de commande de communication et indiquent une période de validité pendant laquelle la carte à CI est autorisée à effectuer une opération sur le dispositif cible d'opération, et la transmission des informations de période de validité au dispositif cible d'opération.
